# EUROPÄISCHE PATENTSCHRIFT

(11) **EP 2 932 829 B1**
(45) Veröffentlichungstag und Bekanntmachung des Hinweises auf die Patenterteilung: **25.01.2017**
(21) Anmeldenummer: 15161913.7
(22) Anmeldetag: 31.03.2015
(51) Int. Cl.: A01K 5/00, A23N 17/00, B01F 3/18, B01F 7/24, B01F 13/00, B01F 15/02, B65G 53/12, F04C 23/00, F04C 28/02, F04C 28/06, F04C 18/12, F04C 25/02, B65G 53/28

(54) **FAHRZEUG, INSBESONDERE ZUR FUTTERAUFBEREITUNG**
VEHICLE, IN PARTICULAR FOR FEED PROCESSING
VÉHICULE, EN PARTICULIER DESTINÉ À LA PRÉPARATION DE FOURRAGE

(30) Priorität: 15.04.2014 AT 5005814 U
(43) Veröffentlichungstag der Anmeldung: 21.10.2015
(73) Patentinhaber: Tropper Maschinen und Anlagen GmbH, 4846 Redlham (AT)
(72) Erfinder: Tropper, Johannes, 4690 Schwanenstadt (AT)
(74) Vertreter: Patentanwaltskanzlei Hübscher

(56) Entgegenhaltungen:
- EP-A1- 0 752 531
- AT-A2- 505 121
- DE-B3-102006 029 888
- DE-U1-202009 011 076
- JP-A- 2002 349 467

## Beschreibung

Die Erfindung bezieht sich auf ein Fahrzeug, insbesondere zur Futteraufbereitung, mit wenigstens einem Mischbehälter für rieselfähiges Mischgut und mit einer Drehkolben-Gebläseeinrichtung, die saugseitig an den Mischbehälter und druckseitig an eine pneumatische Fördereinrichtung zum Austragen des gemischten Mischguts aus dem Mischbehälter angeschlossen ist.

Insbesondere zur Futteraufbereitung ist es bekannt (DE 20 2009 011 076 U1, AT 10 734 U1, AT 505 121 A2), auf Fahrzeugen stehende Mischbehälter mit einer koaxialen Mischeinrichtung vorzusehen, die aus einer von einem Austragstrichter der Mischbehälter ausgehenden, ein Fördergehäuse durchsetzenden und im Deckenbereich der Mischbehälter endenden Mischerschnecke besteht. Mit Hilfe dieser Mischerschnecke wird das rieselfähige Mischgut aus dem Austragstrichter nach oben gefördert und auf den Mischgutstock abgeworfen, sodass das Gut aufgrund der dadurch bedingten Kreislaufführung gemischt wird. Die Befüllung der Mischbehälter erfolgt über ein Drehkolbengebläse, das saugseitig an den als Druckbehälter ausgebildeten Mischbehälter angeschlossen ist, sodass das Mischgut beispielsweise über eine Quetsch- und Mahleinrichtung in den Mischbehälter angesaugt und im Mischbehälter mit ebenfalls angesaugten Zusatzstoffen vermischt wird, bevor das gemischte Gut ausgetragen wird. Für den Gutaustrag ist die Druckseite des Drehkolbengebläses mit einer an den Austragstrichter des Mischbehälters angeschlossenen, gegenüber dem Austragstrichter absperrbaren Auslasskammer verbunden, von der wenigstens eine pneumatische Förderleitung ausgeht. Fahrzeuge mit solchen Mischbehältern haben sich gut bewährt, doch machen höhere Anforderungen an die anteiligen Rüst- und Rangierzeiten Mischbehälter mit einem größeren Fassungsvolumen erforderlich, was wiederum die Forderung nach größeren Austragsleistungen mit sich bringt, Die eingesetzten Drehkolbengebläse eignen sich zwar aufgrund ihrer einfachen Drehzahlanpassung für einen ausreichenden Unterdruckaufbau im Mischbehälter, können jedoch die für hohe Austragsleistungen erforderliche Druckluft zur Beaufschlagung der pneumatischen Fördereinrichtungen nicht zur Verfügung stellen. Der sich im Hinblick auf die Druckerhöhung anbietende Einsatz von Schraubenverdichtern muss jedoch wegen des im Saugbetrieb geforderten weiten Drehzahlbereichs verworfen werden, der durch Schraubenverdichter nicht abgedeckt werden kann.

Der Erfindung liegt somit die Aufgabe zugrunde, die Austragsleistung für den Mischbehälter eines Fahrzeugs, insbesondere auf dem Gebiet der Futteraufbereitung, zu steigern, ohne auf eine vorteilhafte Unterdruckbeaufschlagung des Mischbehälters verzichten zu müssen.

Ausgehend von einem Fahrzeug der eingangs geschilderten Art löst die Erfindung die gestellte Aufgabe dadurch, dass die Drehkolben-Gebläseeinrichtung zwei unter Zwischenschaltung eines Kühlers in Reihe geschaltete Drehkolbengebläse umfasst, von denen das stromabwärts vorgesehene Drehkolbengebläse zur Druckbeaufschlagung der pneumatischen Fördereinrichtung wahlweise zuschaltbar ist.

Durch die Reihenschaltung zweier Drehkolbengebläse wird eine zweistufige Gebläseeinrichtung geschaffen, bei der das stromaufwärts liegende Drehkolbengebläse für eine Vorverdichtung der angesaugten Luft sorgt und das nachfolgende, stromabwärts vorgesehene Drehkolbengebläse die vorverdichtete Luft auf den geforderten Druck anhebt, mit dem die pneumatische Fördereinrichtung zum Austragen des gemischten Mischguts aus dem Mischbehälter beaufschlagt wird. Die Kühlung der vorverdichteten Luft mit Hilfe des zwischen den beiden Drehkolbengebläsen angeordneten Kühlers ist erforderlich, um den beispielsweise für die Futteraufbereitung zulässigen Temperaturbereich für die Beaufschlagung der Fördereinrichtung nicht zu überschreiten. Um den Mischbehälter zum Ansaugen des Mischguts und der jeweiligen Zusatzstoffe mit dem erforderlichen Unterdruck beaufschlagen zu können, genügt der Einsatz lediglich des stromaufwärts vorgesehenen Drehkolbengebläses, sodass diesbezüglich die Vorteile eines Drehkolbengebläses gemäß dem Stand der Technik genützt werden können.

Um in einfacher Art das stromabwärts gelegene Drehkolbengebläse 23 aus dem Strömungspfad der Drehkolben-Gebläseeinrichtung nehmen zu können, kann für das stromabwärts angeordnete Drehkolbengebläse eine Umgehungsleitung mit einem Rückschlagventil vorgesehen sein. Solange der ausgangseitige Druck des stromabwärts angeordneten Drehkolbengebläses nicht den Ausgangsdruck des stromaufwärts vorgesehenen Drehkolbengebläses übersteigt, wird das die zweite Gebläsestufe bildende Drehkolbengebläse von der Umgehungsleitung überbrückt. Da im Allgemeinen die verdichteten Luft am Ausgang des stromaufwärts gelegenen Drehkolbengebläses nur zu kühlen ist, wenn sie in der zweiten Gebläsestufe nachverdichtet wird, kann die Umgehungsleitung das stromabwärts vorgesehene Gebläse zusammen mit dem Kühler überbrücken.

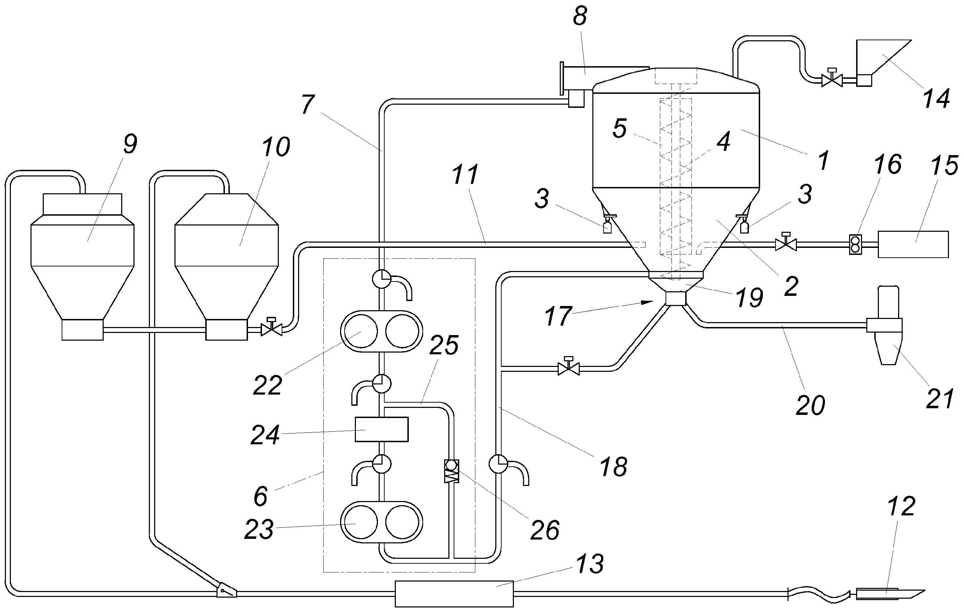

In der Zeichnung ist der Erfindungsgegenstand beispielsweise dargestellt, und zwar wird der Aufbau eines erfindungsgemäßen Fahrzeuges zur Futteraufbereitung mit einem Mischbehälter in einem schematischen Blockschaltbild gezeigt.

Gemäß dem dargestellten Blockschaltbild weist das Fahrzeug einen Mischbehälter 1 auf, der mit einem Austragstrichter 2 versehen ist und sich über Wiegezellen 3 am Fahrzeugrahmen abstützt. Innerhalb des als Druckbehälter ausgebildeten Mischbehälters 1 ist eine Mischerschnecke 4 vorgesehen, die vom Austragstrichter 2 aufragt und ein Fördergehäuse 5 durchsetzt. Zum Beladen des Mischbehälters 1 dient eine Drehkolben-Gebläseeinrichtung 6, die über eine Saugleitung 7 und eine Filtereinrichtung 8 an den Mischbehälter 1 angeschlossen ist und den Mischbehälter mit einem entsprechenden Unterdruck beaufschlagt. Über eine einerseits an eine Quetscheinrichtung 9 und anderseits an eine Mühle 10 angeschlossene Zubringerleitung 10 wird Mischgut, beispielsweise Getreide, in den Mischbehälter 1 angesaugt. Das Mischgut kann mittels einer Sauglanze 12 aus einem Vorratsbehälter abgesaugt und über einen Magnetabscheider 13 der Quetscheinrichtung 9 bzw. der Mühle 10 zugeführt werden. Zusatzstoffe für das Mischgut können über eine Gosse 13 aufgegeben werden. Außerdem kann das Mischgut mit Flüssigkeit versetzt werden, die einem Tank 14 mit Hilfe einer Pumpe 15 entnommen wird.

Nach dem Mischen des Mischguts mit den Zusatzstoffen durch die Mischerschnecke 4 innerhalb des Mischbehälters 1 wird das gemischte Mischgut über den Austragstrichter 2 ausgetragen, und zwar mittels einer pneumatisch beaufschlagbaren Fördereinrichtung 17, die an die Druckleitung 18 der Drehkolben-Gebläseeinrichtung 6 angeschlossen ist. Die Druckleitung 18 steht außerdem mit einer Auslasskammer 19 des Austragstrichters 2 in Verbindung, die über eine Förderleitung 20 mit einem Zyklonabscheider 21 verbunden ist. Zum Ausfördern des Mischguts aus dem Mischbehälter 1 wird der Mischbehälter 1 von der Unterdruckbeaufschlagung abgeschaltet und die Auslasskammer 19 mit Druckluft beaufschlagt, sodass das durch den Austragstrichter 2 in die Auslasskammer 19 nachrieselnde Mischgut vom Förderluftstrom erfasst und dem Zyklonabscheider 21 zugefördert wird.

Zum Unterschied zu herkömmlichen Drehkolben-Gebläseeinrichtungen, die jeweils nur ein Drehkolbengebläse aufweisen, umfasst die erfindungsgemäße Drehkolben-Gebläseeinrichtung 6 zwei in Reihe geschaltete Drehkolbengebläse 22, 23 mit einem zwischengeschalteten Kühler 24. Dem stromabwärts gelegenen Drehkolbengebläse 23 ist zusammen mit dem Kühler 24 eine Umgehungsleitung 25 mit einem Rückschlagventil 26 zugeordnet, wodurch das stromabwärts gelegenen Drehkolbengebläse 23 in einfacher Weise aus dem Strömungspfad der Drehkolben-Gebläseeinrichtung 6 genommen werden kann.

Die Steuerung der beiden Drehkolbengebläse 22, 23 erfolgt so, dass zur Unterdruckbeaufschlagung des Mischbehälters 1 lediglich das stromaufwärts gelegene Drehkolbengebläse 22 eingesetzt wird, sodass sich bezüglich der Ansaugung des Mischguts bzw. der Zusatzstoffe in den Mischbehälter 1 Beaufschlagungsverhältnisse entsprechend dem Stand der Technik ergeben. Trotz des Einsatzes von Drehkolbengebläsen kann die Austragsleistung der Fördereinrichtung 17 erheblich gesteigert werden, weil durch die Reihenschaltung der beiden Drehkolbengebläse 22, 23 eine zweistufige Verdichtung möglich wird. Mit Hilfe des stromaufwärts gelegenen Drehkolbengebläses 22 wird nämlich eine Vorverdichtung der angesaugten Luft erreicht, die im stromabwärts vorgesehenen Drehkolbengebläse 23 auf ein für die Fördereinrichtung 17 ausreichend hohes Druckniveau angehoben wird. Der zwischen den beiden Drehkolbengebläsen 22, 23 vorgesehene Kühler 24 sorgt dabei dafür, dass die Druckluft zur Beaufschlagung der pneumatischen Fördereinrichtung 17 innerhalb eines für eine Futtermittelmischung zulässigen Temperaturbereichs gehalten werden kann.

Es braucht wohl nicht besonders hervorgehoben zu werden, dass die Erfindung nicht auf das dargestellte Ausführungsbeispiel mit einem einzigen Mischbehälter 1 beschränkt ist. Die Vorteile einer erfindungsgemäßen Drehkolben-Gebläseeinrichtung 6 können selbstverständlich bei Fahrzeugen mit zwei Mischbehältern oder mit in mehrere Mischkammern unterteilten Mischkammern ebenfalls genützt werden.

## Patentansprüche

1. Fahrzeug, insbesondere zur Futteraufbereitung, mit wenigstens einem Mischbehälter (1) für rieselfähiges Mischgut und mit einer Drehkolben-Gebläseeinrichtung (6), die saugseitig an den Mischbehälter (1) und druckseitig an eine pneumatische Fördereinrichtung (17) zum Austragen des gemischten Mischguts aus dem Mischbehälter (1) angeschlossen ist, **dadurch gekennzeichnet, dass** die Drehkolben-Gebläseeinrichtung (6) zwei unter Zwischenschaltung eines Kühlers (24) in Reihe geschaltete Drehkolbengebläse (22, 23) umfasst, von denen das stromabwärts vorgesehene Drehkolbengebläse (23) zur Druckbeaufschlagung der pneumatischen Fördereinrichtung (17) wahlweise zuschaltbar ist.

2. Fahrzeug nach Anspruch 1, **dadurch gekennzeichnet, dass** für das stromabwärts angeordnete Drehkolbengebläse (23) eine Umgehungsleitung (25) mit einem Rückschlagventil (26) vorgesehen ist.

3. Fahrzeug nach Anspruch 2, **dadurch gekennzeichnet, dass** die Umgehungsleitung (25) das stromabwärts vorgesehene Drehkolbengebläse (23) zusammen mit dem Kühler (24) überbrückt.

## Claims

1. Vehicle, in particular for feed processing, comprising at least one mixing container (1) for a pourable mixture and comprising a rotary piston fan installation (6) which is connected on the suction-side to the mixing container (1) and is connected on the pressure-side to a pneumatic conveying device (17) for discharging the blended mixture from the mixing container (1), **characterised in that** the rotary piston fan installation (6) comprises two rotary piston fans (22, 23) which are connected in series with a cooler (24) being positioned therebetween and of which the rotary piston fan (23) provided downstream can optionally be switched on to pressurise the pneumatic conveying device (17).

2. Vehicle as claimed in claim 1, **characterised in that** a bypass line (25) comprising a non-return valve (26) is provided for the rotary piston fan (23) arranged downstream.

3. Vehicle as claimed in claim 2, **characterised in that** the bypass line (25) bridges the rotary piston fan (23), which is provided downstream, together with the cooler (24).

## Revendications

1. Véhicule, en particulier pour la préparation de fourrage, avec au moins un récipient de mélange (1) destiné à écoulement libre de matériau à mélanger et avec un dispositif de soufflante à piston rotatif (6) qui est relié côté aspiration, au niveau du récipient de mélange (1) et côté pression, au niveau d'un dispositif de transport pneumatique (17) pour décharger le matériau à mélanger mélangé hors du récipient de mélange (1), **caractérisé en ce que** le dispositif de soufflante à piston rotatif (6) comprend deux soufflantes à piston rotatif (22, 23) montées en série par l'intermédiaire d'un dispositif de refroidissement (24), dont la soufflante à piston rotatif (23) prévue en aval peut être éventuellement raccordée pour mise en pression du dispositif de transport pneumatique (17).

2. Véhicule selon la revendication 1, **caractérisé en ce que** pour la soufflante à piston rotatif (23) disposée en aval, il est prévu une conduite de dérivation (25) avec un clapet anti-retour (26).

3. Véhicule selon la revendication 2, **caractérisé en ce que** la conduite de dérivation (25) court-circuite conjointement le dispositif de refroidissement (24) et la soufflante à piston rotatif (23) prévue en aval.
